# EUROPÄISCHE PATENTSCHRIFT

(11) **EP 2 908 264 B1**
(45) Veröffentlichungstag und Bekanntmachung des Hinweises auf die Patenterteilung: **03.02.2016**
(21) Anmeldenummer: 14155009.5
(22) Anmeldetag: 13.02.2014
(51) Int. Cl.: G06K 7/10

(54) **RFID-Lesevorrichtung mit Zustandsanzeige an externer Antenne**
RFID reading device with status display on external antenna
Dispositif de lecture RFID doté d'un affichage d'état au niveau d'une antenne externe

(43) Veröffentlichungstag der Anmeldung: 19.08.2015
(73) Patentinhaber: SICK AG, 79183 Waldkirch (DE)
(72) Erfinder: Sock, Björn, 21629 Neu Wulmstorf (DE); Pilzner, Olaf, 22459 Hamburg (DE); Günther, Andreas, 22941 Bargteheide (DE); Potthast, Jan, 22307 Hamburg (DE)
(74) Vertreter: Hehl, Ulrich

(56) Entgegenhaltungen:
- US-B1- 7 973 645

## Beschreibung

Die Erfindung betrifft eine RFID-Lesevorrichtung zum Auslesen von RFID-Transpondern in einem Lesebereich gemäß einem RFID-Protokoll mit Hilfe einer externen Antenne sowie ein Verfahren zum Anzeigen und/oder Verändern von Zuständen einer externen Antenne nach dem Oberbegriff von Anspruch 1 beziehungsweise 15.

RFID-Lesesysteme dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

RFID-Transponder können prinzipiell aktiv sein, also eine eigene Energieversorgung aufweisen. In der Praxis eignen sich diese Transponder für die Logistik aber weniger, weil durch die Energieversorgung die Stückpreise solcher Transponder nicht das für den Massenmarkt erforderliche geringe Niveau erreichen können. Deshalb werden zumeist passive Transponder ohne eigene Energieversorgung eingesetzt. In beiden Fällen wird durch elektromagnetische Strahlung des Lesegerätes der Transponder zur Abstrahlung der gespeicherten Information angeregt, wobei passive Transponder die notwendige Energie aus der Sendeenergie des Lesesystems beziehen. In etablierten Ultrahochfrequenzstandards wie ISO 18000-6 oder EPC Generation-2 UHF RFID werden passive Transponder nach dem Backscatter-Verfahren ausgelesen.

Ein häufiger Einsatzort eines RFID-Lesesystems ist die Montage an einem Förderband, auf dem die Waren gefördert werden, oder in einem sogenannten Leseportal. Darunter ist ein beliebiger Durchgang zu verstehen, welcher mit einem oder mehreren RFID-Lesern und möglicherweise weiteren Sensoren ausgestattet ist. Objekte werden mittels eines Förderbandes, eines Transportfahrzeugs, wie ein Gabelstapler, oder auch von Hand durch das Leseportal bewegt und dabei anhand ihres RFID-Transponders identifiziert.

Um sich an die örtlichen Gegebenheiten anpassen zu können, werden oft RFID-Lesevorrichtungen mit einer oder mehreren abgesetzten externen Antennen eingesetzt, um damit flexiblere Montagepositionen zu erreichen. Eine entsprechende RFID-Lesevorrichtung, die sowohl eine interne als auch eine externe Antenne umfasst, ist beispielsweise aus der DE 20 2010 008 162 U1 bekannt.

Externe Antennen sind üblicherweise passive Komponenten. Es wäre aber wünschenswert, auch an der externen Antenne Informationen anzuzeigen, beispielsweise optische Rückmeldungen über LEDs zu geben. Selbst wenn man nun die externe Antenne entsprechend aufrüstet, damit sie eigene Signalisierungs-, Mess- oder Steuerungsaufgaben übernehmen kann, muss wegen der räumlichen Trennung zu der eigentlichen RFID-Lesevorrichtung eine Kommunikationsverbindung aufgebaut werden. Das wiederum zieht einen erheblichen Aufwand für die Etablierung eines speziellen Kommunikationsprotokolls und zugehörige Hard- und Software in der RFID-Lesevorrichtung wie in der externen Antenne nach sich. Außerdem geht auf diese Weise die Abwärtskompatibilität zwischen RFID-Lesevorrichtungen und externen Antennen verloren, wenn diese nicht beide mit dem Kommunikationsprotokoll umgehen können. Bei Verwendung einer gesonderten Kommunikationsleitung ist mit einem erheblichen Mehraufwand bei Installation und Wartung zu rechnen.

Aus der US 7 973 645 B1 ist ein RFID-Leser bekannt, der mindestens einen Antennenport aufweist. Mehrere Antennenmodule können dabei als seriell verschaltete Kette an demselben Antennenport angeschlossen werden. Es wird dann jeweils ein Steuersignal ausgegeben, welches ein bestimmtes Antennenmodul der Kette selektiert und aktiv schaltet. In einer Ausführungsform ist vorgesehen, dieses Steuersignal auf das RFID-Signal zu modulieren oder darin zu codieren. Der entsprechende Decoder in dem Antennenmodul kann analog zu den Schaltkreisen eines RFID-Tags aufgebaut sein. Die Erfindung hat daher die Aufgabe, die Ansteuerung von Anzeige- oder Bedienelementen der externen Antenne einer RFID-Lesevorrichtung zu vereinfachen.

Diese Aufgabe wird durch eine RFID-Lesevorrichtung zum Auslesen von RFID-Transpondern in einem Lesebereich gemäß einem RFID-Protokoll mit Hilfe einer externen Antenne sowie ein Verfahren zum Anzeigen und/oder Verändern von Zuständen einer externen Antenne nach Anspruch 1 beziehungsweise 14 gelöst. Dabei wird eine Kommunikation zwischen dem eigentlichen RFID-Leser und der daran angeschlossenen externen Antenne etabliert, um über diesen Datenaustausch verschiedene Steuerund Messaufgaben zu erfüllen. Die Erfindung geht von dem Grundgedanken aus, die Kommunikation über dieselbe schon vorhandene Leitung zu übertragen, über welche die externe Antenne angeschlossen ist. Dabei findet die Kommunikation über das bereits in dem RFID-Leser implementierte RFID-Protokoll statt, mit dem auch RFID-Transponder ausgelesen werden, also beispielsweise gemäß ISO 18000-6 oder EPC Generation-2 UHF RFID. Damit entfällt nicht nur eine eigene Kommunikationsleitung, sondern auch die Implementierung eines neuen Kommunikationsverfahrens zum Ansteuern der Anzeige- oder Bedienelemente der externen Antenne. Dabei bedeutet Bedienelement ganz allgemein entweder eine Einstellmöglichkeit für einen Anwender oder auch interne Schalter, Sensoren und dergleichen der externen Antenne. Es werden noch zahlreiche Beispiele solcher Ansteuerungen gegeben. Allgemein werden dadurch Parameter und Zustände der externen Antenne oder der RFID-Lesevorrichtung eingestellt, verändert oder angezeigt.

Die externe Antenne ist von einer internen Antenne zu unterscheiden. Das bedeutet insbesondere, dass sich die externe Antenne nicht in einem Gehäuse mit der Auswertungseinheit des RFID-Lesers befindet, sondern über die Leitung örtlich separiert ist, beispielsweise in einem eigenen Gehäuse. Dementsprechend sind die Kommunikationseinheit der externen Antenne und die Auswertungseinheit des RFID-Lesers voneinander durch die Leitung separiert. Die erfindungsgemäße externe Antenne umfasst dabei mehr als das reine Antennenelement, nämlich unter anderem die Kommunikationseinheit und die Anzeige- beziehungsweise Bedienelemente.

Die Erfindung hat den Vorteil, dass die gleiche, schon vorhandene Leitung zum Anschließen der externen Antenne auch für die Kommunikation genutzt werden kann und dadurch kein Mehraufwand für Leitungen und deren Installation entsteht. Das Nutzen des bereits implementierten RFID-Protokolls birgt zum einen den Vorteil, dass jeglicher Aufwand zum Etablieren eines eigenen Protokolls entfällt. Außerdem würde ein solches Protokoll Maßnahmen enthalten müssen, um die Koexistenz mit einer Signalübertragung von RFID-Signalen von und an RFID-Transponder zu gewährleisten. Auch das entfällt bei Verwendung des identischen Protokolls. Mit kollidierenden RFID-Signalen kann das RFID-Protokoll umgehen, weil dieses Problem schon im Zusammenhang mit dem gleichzeitigen Lesen von mehreren RFID-Transpondern gelöst wurde. Außerdem ist die Erfindung mit jeder RFID-Lesevorrichtung nach dem RFID-Protokoll abwärtskompatibel. Durch die Anzeige- und Bedienelemente an der externen Antenne, allgemein Aktoren und Sensoren, entsteht ein erheblicher Mehrwert.

Die externe Antenne weist bevorzugt ein Kopplungselement in der Leitung auf, um Signale der Kommunikationseinheit auf die Leitung einzukoppeln oder aus der Leitung auszukoppeln. Mit diesem Kopplungselement, das beispielsweise ein Richtkoppler ist, schaltet sich die Kommunikationseinheit auf die Leitung zwischen RFID-Leser und Antenne.

Die Kommunikationseinheit weist bevorzugt einen RFID-Transponder auf. Derartige RFID-Transponder sind leicht verfügbar, und ihre Technologie ist bekannt, da der RFID-Leser ohnehin zum Lesen gerade solcher RFID-Transponder ausgebildet ist. Es ist also ein besonders geeignetes Mittel, um die Kommunikation mit der externen Antenne über das RFID-Protokoll umzusetzen.

Die externe Antenne weist bevorzugt eine zweite Auswertungseinheit zur lokalen Steuerung auf. Die externe Antenne enthält also eigene Steuer- und Auswertungsschaltungen unabhängig von der Auswertungseinheit des RFID-Lesers. Das ist besonders dann vorteilhaft, wenn die externe Antenne komplexere Aufgaben erfüllen soll. Beispielsweise zum bloßen Aktivieren von Anzeige-LEDs muss eine zweite Auswertungseinheit nicht zwingend vorgesehen sein.

Die Kommunikationseinheit weist bevorzugt eine digitale Schnittstelle zur Verbindung mit der zweiten Auswertungseinheit auf. Über diese digitale Schnittstelle kann die zweite Auswertungseinheit direkt und einfach in die Kommunikation eingebunden werden. Beispielsweise erfolgt ein Zugriff auf die Kommunikationseinheit zyklisch oder auf einen Interrupt hin, der durch eine Kommunikation zwischen der Kommunikationseinheit und der Auswertungseinheit des RFID-Lesers ausgelöst wird.

Die Kommunikationseinheit weist bevorzugt eine Modulator- und Demodulatoreinheit auf. Mit deren Hilfe kann die zweite Auswertungseinheit das RFID-Protokoll emulieren. Ein RFID-Transponderchip in der externen Antenne wird so ersetzt.

Die Kommunikationseinheit weist vorzugsweise einen Speicher auf. Diese Speicher ist vor allem funktional der Kommunikationseinheit zugeordnet. Physisch kann der Speicher außer in der Kommunikationseinheit auch Teil der zweiten Auswertungseinheit oder ein eigenes Bauteil sein. Der Speicher dient dazu, die zu kommunizierenden Daten, wie Parameter, Messdaten, Steuerungsinformationen oder Zustände, und gegebenenfalls auch Hilfsgrößen abzulegen.

Die Kommunikationseinheit ist bevorzugt dafür ausgebildet, Antennenparameter in dem Speicher abzulegen oder daraus auszulesen. Das erleichtert die Diagnose, Einrichtung und Wartung der externen Antenne, denn die Antennenparameter können jederzeit ausgelesen oder angezeigt werden. Insbesondere bei einem Antennentausch ist bekannt, wie die alte externe Antenne parametriert war. Diese Daten werden beispielsweise in den RFID-Leser gelesen und anschließend der neuen externen Antenne übergeben. Andere Parameter wie beispielsweise der Antennengewinn werden nur gelesen, damit der RFID-Leser die Leistung entsprechend einstellen kann. Dadurch wird automatisch eine gleiche Funktion sichergestellt oder zumindest erheblich erleichtert.

Das Anzeigeelement weist vorzugsweise mindestens eine LED auf. Das ist eine kostengünstige, robuste und einfach zu erfassende Art und Weise, Informationen anzuzeigen. Es können auch mehrere LEDs oder farbige LEDs verwendet werden, um durch örtliche, zeitliche und farbliche Codierungen auch komplexere Informationen darstellen zu können. Beispiele für derart anzuzeigende Informationen sind, ob die Antenne beziehungsweise die RFID-Lesevorrichtung aktiv ist, ob die letzte Lesung erfolgreich war, Fehlerzustände und dergleichen.

Das Bedienelement weist bevorzugt mindestens einen Taster auf. Dabei handelt es sich mit einem Bedienknopf, einem Schalter oder ähnlichem um ein vergleichbar einfaches Element wie eine LED, mit dem nun umgekehrt der Anwender durch einfaches Drücken Befehle an die externe Antenne oder die RFID-Lesevorrichtung eingeben kann. Durch bestimmte Sequenzen müssen sich solche Befehle nicht notwendig auf binäre Eingaben beschränken. Beispiele für Befehle sind das Aktivieren der externen Antenne, ein Reset oder das Auslösen von Kalibrier- beziehungsweise Teachfunktionen.

Die externe Antenne weist bevorzugt ein Polarisationsumschaltungselement auf. Dadurch wird deren Polarisation verändert, etwa ein Wechsel zwischen linearer und zirkularer Polarisation oder ein Richtungswechsel der Polarisation. Das ist zu Testzwecken und dann hilfreich, wenn die RFID-Transponder in dem Lesefeld eine bestimmte Vorzugsrichtung haben und die Antenne darauf eingestellt werden soll.

Die externe Antenne weist ein Messelement zur Messung der Hochfrequenzleistung auf. Dieser Messwert wird angezeigt oder an die RFID-Lesevorrichtung zurückgemeldet. Ein Anwendungsbeispiel ist das Regeln der Antennenleistung auf einen Sollwert, insbesondere auf einen gesetzlichen Grenzwert.

An der Leitung ist vorzugsweise ein Schalter zum Unterbrechen der Verbindung zu der Antenne angeordnet. Dieser Schalter befindet sich noch bevorzugter unmittelbar vor dem eigentlichen Antennenelement. Der Schalter soll also nicht die Kommunikationsverbindung unterbrechen, sondern nur das eigentliche Antennensignal abschalten oder auf einen Anschluss der externen Antenne legen. Letzteres dient dazu, mehrere umschaltbare externe Antennen an nur einem Antennenport des RFID-Lesers zu betreiben.

An der Leitung ist bevorzugt ein Versorgungselement vorgesehen, das die externe Antenne mit Spannung versorgt. Die externe Antenne hat bevorzugt keine eigene Versorgung, da dies doch wieder eine weitere Leitung oder zusätzlichen Aufwand für die Bereitstellung einer autarken Energiequelle erfordern würde. Prinzipiell kann die Spannungsversorgung aus den Hochfrequenzsignalen auf der Leitung ausgekoppelt werden, aber dann dürfen die externe Antenne und ihre Komponenten nur eine sehr geringe Leistungsaufnahme haben. Alternativ gibt es eine eigene DC-Einspeisung in die Leitung, sei es von der RFID-Lesevorrichtung aus oder notfalls mit einer zusätzlichen Anschaltbox.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung eines RFID-Lesers mit einer externen Antenne;
- Fig. 2: eine Blockdarstellung möglicher Komponenten einer externen Antenne; und
- Fig. 3: eine dreidimensionale schematische Darstellung der Montage eines RFID-Lesers mit mehreren externen Antennen an einem Förderband.

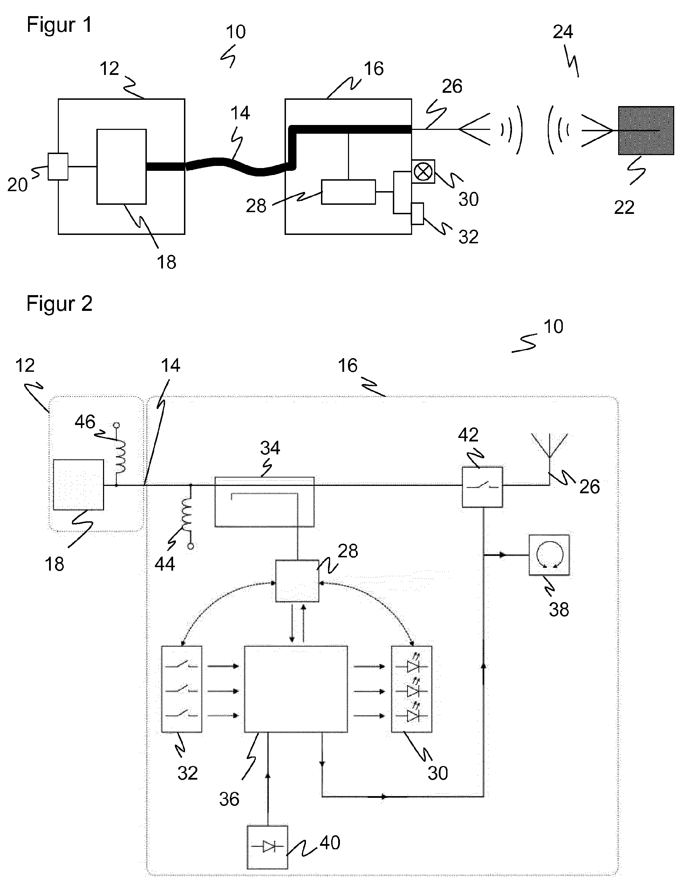

Figur 1 zeigt eine Blockdarstellung einer RFID-Lesevorrichtung 10 mit einem eigentlichen RFID-Leser 12 und einer daran über eine Leitung 14, vorzugsweise eine Koaxialleitung, angeschlossenen externen Antenne 16. Der Aufbau des RFID-Lesers 12 wird weitgehend als bekannt vorausgesetzt. Dargestellt sind lediglich eine Empfangs- und Auswertungseinheit 18, beispielsweise mit einem Digitalbaustein wie einem Mikroprozessor oder einem FPGA (Field Programmable Gate Array) zum Auswerten und Erzeugen von RFID-Signalen, sowie ein drahtgebundener oder drahtloser Anschluss 20, um die RFID-Lesevorrichtung 10 in ein übergeordnetes System einzubinden.

Die RFID-Lesevorrichtung 10 dient dazu, RFID-Informationen aus Transpondern 22 in einem Lesefeld 24 auszulesen, beziehungsweise RFID-Informationen in Transponder 22 zu schreiben. Die Kommunikation erfolgt gemäß einem bekannten RFID-Protokoll, etwa ISO 18000-6 oder EPC Generation-2 UHF RFID, und die dafür erforderlichen Schritte und Komponenten sind an sich bekannt, so dass sie hier nicht näher erläutert werden. Für das Verständnis der Erfindung genügt zu wissen, dass der RFID-Leser 12 mit seiner Auswertungseinheit 18 in der Lage ist, eine RFID-Information aus einem über ein Antennenelement 26 der externen Antenne 16 und die Leitung 14 empfangenes RFID-Signal zu lesen beziehungsweise umgekehrt eine RFID-Information in ein RFID-Signal zu codieren und über das Antennenelement 26 abzustrahlen.

Die externe Antenne 16 enthält außer dem Antennenelement 26, das auch als Patchantenne ausgeführt und in die Gehäusewandung oder in Leiterkarten integriert sein kann, eine Kommunikationseinheit 28, die über die Leitung 14 mit der Auswertungseinheit 18 des RFID-Lesers 12 verbunden ist. Dadurch steht die externe Antenne 16 über dieselbe Leitung 14 mit dem RFID-Leser 12 in Verbindung, die auch die RFID-Signale des Antennenelements 26 und damit zu und von Transpondern 22 im Lesefeld 24 überträgt. Für diese Kommunikation wird darüber hinaus auch das gleiche RFID-Protokoll verwendet wie bei einer Kommunikation zwischen dem RFID-Leser 12 und einem Transponder 22 im Lesefeld 24, also beispielsweise ISO 18000-6 oder EPC Generation-2 UHF RFID.

Dadurch wird die externe Antenne 16 von dem RFID-Leser 12 aus ansprechbar. Dies kann unter anderem dazu genutzt werden, Parameter oder Zustände des RFID-Lesers 12 oder der Antenne 16 an einem Anzeigeelement 30 anzuzeigen oder durch ein Bedienelement 32 zu verändern. In Figur 1 sind rein beispielhaft das Anzeigeelement 30 als Lämpchen oder LED und das Bedienelement 32 als Taster dargestellt.

Figur 2 zeigt eine Blockdarstellung einer Ausführungsform der RFID-Lesevorrichtung 10, um mögliche Komponenten der externen Antenne 16 zu erläutern. Dabei bezeichnen in dieser Beschreibung die gleichen Bezugszeichen die gleichen oder einander entsprechende Merkmale.

Die Leitung 14 ist durch einen Richtkoppler 34 mit der Kommunikationseinheit 28 verbunden. Um die Funktion der externen Antenne 16 zu steuern, ist darin eine eigene zweite Auswertungseinheit 36 vorgesehen, die mit der Kommunikationseinheit 28 und den meisten weiteren Komponenten der externen Antenne 16 in Verbindung steht und die vorzugsweise auf einem Digitalbaustein implementiert ist. In einer vereinfachten Ausführungsform kann auf die zweite Auswertungseinheit 36 verzichtet werden. In diesem Fall besteht eine direkte Verbindung der Kommunikationseinheit 28 zu den Anzeigeelementen 30 beziehungsweise den Bedienelementen 32, wie durch gestrichelte Pfeile dargestellt.

Die Kommunikationseinheit 28 ist in einer Ausführungsform als Transponder-IC mit integrierter digitaler Schnittstelle zur Anbindung an die zweite Auswertungseinheit 36 ausgebildet. Alternativ erfolgt die Protokollanbindung über die zweite Auswertungseinheit 36 und eine Protokollemulation, wobei dann die Kommunikationseinheit 28 als Modulator/Demodulator fungiert.

Die Kommunikationseinheit 28 hat Zugriff auf einen Speicher, der Teil der Kommunikationseinheit 28, der zweiten Auswertungseinheit 36 oder ein nicht dargestellter separater Speicher sein kann. Besonders einfach ist, direkt einen bestimmten Bereich des User-Memorys des Transponder-IC zu nutzen, wohin die kommunizierten Daten wie Steuerbefehle, Zustände oder Messwerte geschrieben werden. Vorzugsweise hat jeder Datensatz, insbesondere jeder Befehl und Messwert, eine bekannte, vereinbarte Speicheradresse.

Schreib- wie Lesezugriff auf diesen Speicher kann sowohl über die Luftschnittstelle als auch leitungsgebunden erfolgen. Der RFID-Leser 12 kann die Luftschnittstelle über das Antennenelement 26 und die Verbindung über den Richtkoppler 34, die zweite Auswertungseinheit 36 ihren direkten Anschluss nutzen. Dabei wird beispielsweise der Speicher von dem RFID-Leser 12 zyklisch auf neue Inhalte geprüft. Die zweite Auswertungseinheit 36 reagiert je nach verwendeter Kommunikationseinheit 28, insbesondere abhängig davon, ob und welcher Transponder-IC darin vorgesehen ist, auf einen Interrupt, der durch den Zugriff der RFID-Lesers 12 auf den Speicher ausgelöst wurde, oder sie liest den Speicher ebenfalls zyklisch aus.

Figur 2 zeigt mehrere Komponenten, die über die Kommunikationseinheit 28 beziehungsweise die zweite Auswertungseinheit 36 angesteuert werden können und die nun erläutert werden. Dabei sind verschiedene Ausführungen denkbar, die nur einen Teil dieser Komponenten verwenden.

Als Anzeigeelement 30 können eine oder mehrere LEDs vorgesehen sein. Da die RFID-Signale anders als beispielsweise sichtbares Licht entsprechende optischer Sensoren nicht visuell erfassbar sind, wird der Betriebszustand über LEDs signalisiert. Entsprechende LEDs am RFID-Leser 12 selbst wären je nach örtlichen Gegebenheiten und Länge der Leitung 14 im Leseumfeld der externen Antenne 16 nicht einsehbar. Die LEDs können lediglich ein- und abgeschaltet werden, aber auch durch Farbverläufe, Blinksequenzen und andere Aktivitätsmuster komplexere Informationen anzeigen. Zu den möglichen Anzeigen zählen Betriebszustand (Lesefeld aktiv oder inaktiv), Leseereignis erfolgreich/nicht erfolgreich, Empfangssignalstärke (RSSI) als Farbverlauf, Leserate (Antworten eines Transponders über die Zeit) als Farbverlauf, Antennenanpassung/Rücklaufende Leistung (VSWR) als Farbverlauf, Hardwarefehler und weitere.

Als beispielhaftes Bedienelement 32 für eine Interaktion des Anwenders mit dem RFID-Leser 12 zeigt Figur 2 mehrere Taster. Die Taster können beispielsweise im laufenden Betrieb oder zum Einrichten des RFID-Lesers 12 oder der externen Antenne 16, zum Einschalten von Testmodi, zum Triggern der Aktivierung des Lesefelds 24 oder zum Signalisieren der Entnahme einer Ware direkt am Standort der externen Antenne 16 genutzt werden.

Als weiteres mögliches Element der externen Antenne 16 ist ein Polarisationsumschalter 38 vorgesehen. Transponder 22 senden üblicherweise ein linear polarisiertes Signal. Ist die Vorzugsrichtung bekannt, kann das Antennenelement 16 mit linearer Polarisation der entsprechenden Ausrichtung arbeiten. Ansonsten wird mit einer zirkularen Polarisation gearbeitet. Je nach Lage der Transponder 22 bieten gewisse Polarisationseigenschaften Vorteile in der Lesereichweite. Aus diesem Grund kann es sinnvoll sein, die Polarisation beim Einrichten oder im Betrieb umzuschalten. Denkbare schaltbare Polarisationszustände sind: links zirkular, rechts zirkular, horizontal (linear) oder vertikal (linear).

Die vom Gesetzgeber vorgeschriebene maximale Sendeleistung einer RFID-Lesevorrichtung 10 bezieht sich auf die von dem Antennenelement 26 abgestrahlte Leistung (ERP oder EIRP). Diese maximale Sendeleistung soll üblicherweise voll ausgenutzt werden, um zuverlässig und mit hoher Lesereichweite zu lesen. Es sind aber auch andere Sollwerte für die Sendeleistung denkbar. Als Näherung für die Ermittlung der abgestrahlten Leistung kann die in dem RFID-Leser 12 erzeugte Leistung sowie der Antennengewinn verwendet werden. Das entspricht aber vor allem wegen der Verluste der Leitung 14, von der regelmäßig nicht einmal die Länge bekannt ist, nicht der tatsächlichen Sendeleistung. Deshalb kann ein Leistungssensor 40 in der externen Antenne 16 untergebracht werden, der die an der Antenne ankommende Leistung misst und an den RFID-Leser 12 zurückmeldet. So kann der RFID-Leser 12 die Leistung regeln, um die Leitungsverluste unter Wahrung der gesetzlichen Grenzwerte für die abgestrahlte Leistung auszugleichen.

Mit Hilfe eines steuerbaren Hochfrequenzschalters 42 in der Leitung 14 vor dem Antennenelement 26 ist es möglich, das Antennenelement 26 elektrisch abzutrennen oder das Signal auf einen Anschluss an einem Gehäuse der externen Antenne 16 umzuschalten. Dadurch lassen sich mehrere umschaltbare externe Antennen 16 an einem einzigen Antennenport des RFID-Lesers 12 betreiben. Das Trennen des Antennenelements 26 von der Leitung 14 bietet zudem die Möglichkeit, die im vorigen Absatz angesprochenen Leitungsverluste über die Leistung der reflektierten Welle im RFID-Leser 12 zu messen.

Für die Spannungsversorgung der externen Antenne 16 gibt es mehrere Möglichkeiten. Dabei koppelt jeweils eine Versorgungseinheit 44 der externen Antenne 16 die benötigte Spannung aus. Die externe Antenne 16 kann dafür einen Teil des Hochfrequenzsignals auf der Leitung 14 nutzen, aber dies erfordert eine sehr geringe Leistungsaufnahme ihrer Komponenten. Der Vorteil dabei ist, dass an dem RFID-Leser 12 keine Veränderungen vorgenommen werden müssen, also bereits vorhandene herkömmliche RFID-Leser 12 mit einer erfindungsgemäßen externen Antenne 16 zusammenarbeiten. Alternativ wird mit einer Versorgungseinheit 46 des RFID-Lesers 12 eine Spannung auf die Leitung 14 gegeben. Die Versorgungseinheit 46 kann intern innerhalb des RFID-Lesers 12, aber auch in einer separaten Anschaltbox eine Spannung in die Leitung 14 einspeisen. Während die interne Lösung einen Umbau vorhandener RFID-Leser 12 erfordert, muss die Anschaltbox zusätzlich verkabelt werden. Deshalb ist je nach Anwendung zwischen den hier vorgestellten Möglichkeiten zur Versorgung zu wählen.

Der Speicher der Kommunikationseinheit 28 lässt sich auch dafür nutzen, Antennenparameter zu speichern. Nach der Montage einer externen Antenne 16 wird sie auf einem Endprüfer auf korrekte Funktion überprüft und dabei unter anderem der Antennengewinn aufgenommen. Der Antennengewinn und weitere Antennenparameter werden in den Speicher geschrieben und später von dem RFID-Leser 12 abgefragt. Dadurch kann die Berechnung der abgestrahlten Leistung für jede externe Antenne 16 individuell erfolgen, Toleranzen zwischen verschiedenen Antennen werden berücksichtigt, und die jeweilige externe Antenne 16 kann zum Beispiel näher am gesetzlichen Grenzwert betrieben werden. Beim Austausch von Antennen kann die Austauschantenne auf einfache Weise so eingestellt werden, dass sie insbesondere anhand eines gespeicherten individuellen Antennengewinns ein elektromagnetisches Feld mit der gleichen Stärke wie die ursprüngliche Antenne erzeugt. Einige weitere mögliche Antennenparameter, die ebenfalls gespeichert und von dem RFID-Leser 12 verwendet werden können, sind: Strahlungswiderstand, Impedanz, Wirkungsgrad, Richtfaktor, Absorptions- oder Wirkfläche oder Bandbreite, außerdem typisches VSWR oder Polarisation, also etwa ob die Antenne umschaltbare Polarisationseigenschaften besitzt oder nur horizontal, vertikal beziehungsweise zirkular unterstützt. Anstelle der Antennenparameter selbst können auch aufbereitete Parameter gespeichert sein, also Größen, die in dem RFID-Leser verwendet werden sollten, wenn dieser mit der entsprechenden Antenne zusammenarbeitet. Alternativ ermittelt der RFID-Leser 12 solche Größen anhand der Antennenparameter selbst. Der RFID-Leser 12 kann auch anhand der Antennenparameter merken, dass eine Austauschantenne mit der ursprünglichen Antenne nicht kompatibel ist, und einen erneuten Austausch anfordern. Dafür können anstelle von physikalischen Parametern auch künstliche Kennungen für bestimmte Antennenfamilien verwendet werden.

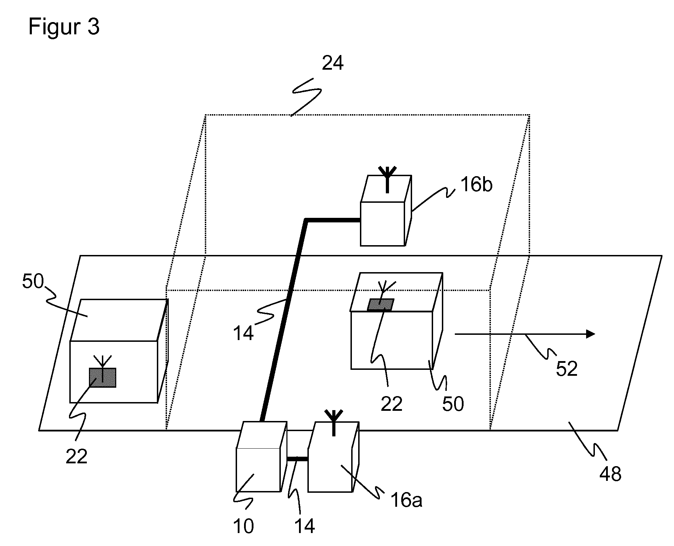

Figur 3 zeigt eine Übersichtsdarstellung einer RFID-Lesevorrichtung 10 mit zwei externen Antennen 16a-b, die zu beiden Seiten eines Förderers 48 montiert sind, welcher Objekte 50 mit Transpondern 22 in einer durch einen Pfeil 52 bezeichneten Richtung durch den Lesebereich 24 fördert. Aufgabe der RFID-Lesevorrichtung in dieser Anwendung ist, die Objekte 50 zu identifizieren, indem Informationen aus den Transpondern 22 ausgelesen und gegebenenfalls auch verändert und zurückgeschrieben werden. Der Lesebereich 24 kann durch eine elektromagnetische Abschirmung geschützt sein und so einen Lesetunnel bilden. Häufig sind an dem Lesetunnel außer der RFID-Lesevorrichtung 10 weitere Sensoren montiert, um zusätzliche Informationen über die Objekte 50 zu gewinnen, beispielsweise deren Eintritt in den und Austritt aus dem Lesebereich 24 oder das Volumen oder Gewicht der Objekte 50.

Alternativ zu der Nutzung desselben Protokolls für die Kommunikation zwischen RFID-Leser 12 und externer Antenne 16 und die Kommunikation mit Transpondern 22 im Lesefeld 24 kann ein zusätzliches Protokoll genutzt werden, welches auf einen niederfrequenten Träger aufmoduliert, wie zum Beispiel DiSEqC. Für sehr einfache Steuerungsaufgaben wäre auch möglich, eine schaltbare Gleichspannung auf die Leitung 14 zu legen und pegelabhängig unterschiedliche LEDs anzusteuern. Beides muss aber eigens implementiert werden und ist deutlich weniger robust und flexibel.

## Patentansprüche

1. RFID-Lesevorrichtung (10) zum Auslesen von RFID-Transpondern (22) in einem Lesebereich (24) gemäß einem RFID-Protokoll, die eine Antenne (16) mit einem Antennenelement (26), einen Empfänger (12, 18) zum Empfangen von RFID-Signalen der RFID-Transponder (22) mit Hilfe der Antenne (16) und eine Auswertungseinheit (12, 18) zum Auslesen einer RFID-Information aus den empfangenen RFID-Signalen aufweist, wobei die Antenne (16) eine über eine Leitung (14) angeschlossene externe Antenne (16) ist, die eine Kommunikationseinheit (28) aufweist, die dafür ausgebildet ist, mit der Auswertungseinheit (12, 18) über die Leitung (14) gemäß dem RFID-Protokoll zu kommunizieren,
**dadurch gekennzeichnet,**
**dass** die externe Antenne (16) ein Anzeigeelement (30) und/oder ein Bedienelement (32) aufweist, das durch Datenaustausch zwischen der Kommunikationseinheit (28) und der Auswertungseinheit (12, 18) ansteuerbar ist, und dass die externe Antenne (16) ein Messelement (40) zur Messung der Hochfrequenzleistung aufweist.

2. RFID-Lesevorrichtung (10) nach Anspruch 1,
wobei die externe Antenne (16) ein Kopplungselement (34) in der Leitung (14) aufweist, um Signale der Kommunikationseinheit (28) auf die Leitung (14) einzukoppeln oder aus der Leitung (14) auszukoppeln.

3. RFID-Lesevorrichtung (10) nach Anspruch 1 oder 2,
wobei die Kommunikationseinheit (28) einen RFID-Transponder aufweist.

4. RFID-Vorrichtung (10) nach einem der vorhergehenden Ansprüche,
wobei die externe Antenne (16) eine zweite Auswertungseinheit (36) zur lokalen Steuerung aufweist.

5. RFID-Vorrichtung (10) nach Anspruch 4,
wobei die Kommunikationseinheit (28) eine digitale Schnittstelle zur Verbindung mit der zweiten Auswertungseinheit (36) aufweist.

6. RFID-Vorrichtung (10) nach einem der vorhergehenden Ansprüche,
wobei die Kommunikationseinheit (28) eine Modulator- und Demodulatoreinheit aufweist.

7. RFID-Vorrichtung (10) nach einem der vorhergehenden Ansprüche,
wobei die Kommunikationseinheit (28) einen Speicher aufweist.

8. RFID-Vorrichtung (10) nach Anspruch 7,
wobei die Kommunikationseinheit (28) dafür ausgebildet ist, Antennenparameter in dem Speicher abzulegen oder daraus auszulesen.

9. RFID-Vorrichtung (10) nach einem der vorhergehenden Ansprüche,
wobei das Anzeigeelement (30) mindestens eine LED aufweist.

10. RFID-Vorrichtung (10) nach einem der vorhergehenden Ansprüche,
wobei das Bedienelement (32) mindestens einen Taster aufweist.

11. RFID-Vorrichtung (10) nach einem der vorhergehenden Ansprüche,
wobei die externe Antenne (16) ein Polarisationsumschaltungselement (38) aufweist.

12. RFID-Vorrichtung (10) nach einem der vorhergehenden Ansprüche,
wobei an der Leitung (14) ein Schalter (42) zum Unterbrechen der Verbindung zu dem Antennenelement (26) angeordnet ist.

13. RFID-Vorrichtung (10) nach einem der vorhergehenden Ansprüche,
wobei an der Leitung (14) ein Versorgungselement (44, 46) vorgesehen ist, das die externe Antenne (16) mit Spannung versorgt.

14. Verfahren zum Anzeigen und/oder Verändern von Zuständen einer externen Antenne (16) mit einem Antennenelement (26), die über eine Leitung (14) an einen RFID-Leser (12) zum Auslesen von RFID-Transpondern (22) in einem Lesebereich (24) gemäß einem RFID-Protokoll angeschlossen ist, wobei die externe Antenne (16) eine Kommunikationseinheit (28) aufweist, die mit dem RFID-Leser (12) über die Leitung (14) gemäß dem RFID-Protokoll kommuniziert,
**dadurch gekennzeichnet,**
**dass** über den Datenaustausch zwischen RFID-Leser (12) und externer Antenne (16) auf der Leitung (14) ein Anzeigeelement (30) und/oder ein Bedienelement (32) der externen Antenne (16) angesteuert wird und dass ein Messwert eines Messelements (40) zur Messung der Hochfrequenzleistung der externen Antenne (16) angezeigt oder an den RFID-Leser (12) zurückgemeldet wird.

## Claims

1. An RFID reading apparatus (10) for reading RFID transponders (22) in a reading zone (24) in accordance with an RFID protocol, the RFID reading apparatus having an antenna (16) with an antenna element (26), a receiver (12, 18) for receiving RFID signals of the RFID transponders (22) with the aid of the antenna (16) and an evaluation unit (12, 18) for reading a piece of RFID information from the received RFID signals, wherein the antenna (16) is an external antenna (16) connected via a line (14) and comprises a communication unit (28) configured to communicate with the evaluation unit (12, 18) via the line (14) in accordance with the RFID protocol, **characterized in that** the external antenna (16) has a display element (30) and/or an operating element (32) which can be controlled by data communication between the communication unit (28) and the evaluation unit (12, 18) and **in that** the external antenna (16) has a measurement element (40) for measuring the radio frequency power.

2. The RFID reading apparatus (10) in accordance with claim 1,
wherein the external antenna (16) has a coupling element (34) in the line (14) to couple signals of the communication unit (28) onto the line (14) or to decouple them out of the line (14).

3. The RFID reading apparatus (10) in accordance with claim 1 or 2,
wherein the communication unit (28) has an RFID transponder.

4. The RFID reading apparatus (10) in accordance with any of the preceding claims,
wherein the external antenna (16) has a second evaluation (36) unit for local control.

5. The RFID reading apparatus (10) in accordance with claim 4,
wherein the communication unit (28) has a digital interface for connecting to the second evaluation unit (36).

6. The RFID reading apparatus (10) in accordance with any of the preceding claims,
wherein the communication unit (28) has a modulator unit and a demodulator unit.

7. The RFID reading apparatus (10) in accordance with any of the preceding claims,
wherein the communication unit (28) has a memory.

8. The RFID reading apparatus (10) in accordance with claim 7,
wherein the communication unit (28) is configured to store antenna parameters in the memory or to read antenna parameters out of the memory.

9. The RFID reading apparatus (10) in accordance with any of the preceding claims,
wherein the display element (30) has at least one LED.

10. The RFID reading apparatus (10) in accordance with any of the preceding claims,
wherein the operating element (32) has at least one push button.

11. The RFID reading apparatus (10) in accordance with any of the preceding claims,
wherein the external antenna (16) has a polarization switching element (38).

12. The RFID reading apparatus (10) in accordance with any of the preceding claims,
wherein a switch (42) for interrupting the connection to the external antenna (16) is arranged at the line (14).

13. The RFID reading apparatus (10) in accordance with any of the preceding claims,
further comprising a supply element (44, 46), the supply element (44, 46) supplying the external antenna (16) with voltage and being arranged at the line (14).

14. A method for displaying and/or changing states of an external antenna (16) with an antenna element (26) which is connected via a line (14) to an RFID reader (12) for reading RFID transponders (22) in a reading zone (24) in accordance with an RFID protocol, wherein the external antenna (16) comprises a communication unit (28) which communicates with the RFID reader (12) via the line (14) in accordance with the RFID protocol,
**characterized in that** a display element (30) and/or an operating element (32) is controlled via the data communication between RFID reader (12) and external antenna (16) via the line (14) and **in that** a measurement value of a measurement element (40) for measuring the radio frequency power of the external antenna (16) is displayed or reported back to the RFID reader (12).

## Revendications

1. Dispositif de lecture RFID (10) pour lire des transpondeurs RFID (2) dans une zone de lecture (24) selon un protocole RFID, qui comprend une antenne (16) avec un élément d'antenne (26), un récepteur (12, 18) pour recevoir des signaux RFID des transpondeurs RFID (22) avec l'aide de l'antenne (16) et une unité d'évaluation (12, 18) pour lire une information RFID à partir des signaux RFID reçus, dans lequel l'antenne (16) est une antenne externe (16) branchée via une ligne (14), qui comprend une unité de communication (28) réalisée pour communiquer avec l'unité d'évaluation (12, 18) via la ligne (14) selon le protocole RFID,
**caractérisé en ce que**
l'antenne externe (16) comprend un élément d'affichage (30) et/ou un élément d'actionnement (32) qui est susceptible d'être piloté par échange de données entre l'unité de communication (28) et l'unité d'évaluation (12, 18), et **en ce que** l'antenne externe (16) comprend un élément de mesure (40) pour mesurer la puissance à haute fréquence.

2. Dispositif de lecture RFID (10) selon la revendication 1,
dans lequel l'antenne externe (16) comprend un élément de couplage (34) dans la ligne (14), afin de coupler des signaux de l'unité de communication (28) sur la ligne (14), ou de les découpler depuis la ligne (14).

3. Dispositif de lecture RFID (10) selon la revendication 1 ou 2,
dans lequel l'unité de communication (28) comprend un transpondeur RFID.

4. Dispositif de lecture RFID (10) selon l'une des revendications précédentes,
dans lequel l'antenne externe (16) comprend une seconde unité d'évaluation (36) pour la commande locale.

5. Dispositif de lecture RFID (10) selon la revendication 4,
dans lequel l'unité de communication (28) comprend une interface numérique pour la liaison avec la seconde unité d'évaluation (36).

6. Dispositif de lecture RFID (10) selon l'une des revendications précédentes,
dans lequel l'unité de communication (28) comprend une unité de modulation-démodulation.

7. Dispositif de lecture RFID (10) selon l'une des revendications précédentes,
dans lequel l'unité de communication (28) comprend une mémoire.

8. Dispositif de lecture RFID (10) selon la revendication 7,
dans lequel l'unité de communication (28) est réalisée pour déposer des paramètres d'antenne dans la mémoire ou pour les lire à partir de celle-ci.

9. Dispositif de lecture RFID (10) selon l'une des revendications précédentes,
dans lequel l'élément d'affichage (30) comprend au moins une diode électroluminescente.

10. Dispositif de lecture RFID (10) selon l'une des revendications précédentes, dans lequel l'élément d'actionnement (32) comprend au moins une touche.

11. Dispositif de lecture RFID (10) selon l'une des revendications précédentes,
dans lequel l'antenne externe (16) comprend un élément d'inversion de polarisation (38).

12. Dispositif de lecture RFID (10) selon l'une des revendications précédentes,
dans lequel un commutateur (42) destiné à interrompre la connexion vers l'élément d'antenne (26) est agencé dans la ligne (14).

13. Dispositif de lecture RFID (10) selon l'une des revendications précédentes,
dans lequel un élément d'alimentation (44, 46), qui alimente l'antenne externe (26) avec une tension, est prévu dans la ligne (14).

14. Procédé pour afficher et/ou modifier des états d'une antenne externe (16) comprenant un élément d'antenne (26), qui est branchée via une ligne (14) à un lecteur RFID (16) pour lire des transpondeurs RFID (22) dans une zone de lecture (24) selon un protocole RFID, dans lequel l'antenne externe (16) comprend une unité de communication (28) qui communique avec le lecteur RFID (12) via la ligne (14) selon le protocole RFID,
**caractérisé en ce que**
un élément d'affichage (30) et/ou un élément d'actionnement (32) de l'antenne externe (16) est piloté via l'échange de données entre le lecteur RFID (12) et l'antenne externe (16) sur la ligne (14), et **en ce qu'**une valeur de mesure d'un élément de mesure (40) destiné à la mesure de la puissance à haute fréquence de l'antenne externe (16) est affichée ou envoyée en retour au lecteur RFID (12).
